# EUROPÄISCHE PATENTSCHRIFT

(11) **EP 0 972 777 B1**
(45) Veröffentlichungstag und Bekanntmachung des Hinweises auf die Patenterteilung: **12.02.2003**
(21) Anmeldenummer: 99113322.4
(22) Anmeldetag: 09.07.1999
(51) Int. Cl.: C07F 9/655

(54) **Verfahren zur Herstellung von Salzen von Ascorbyl-2-phosphorsäureestern**
Process for the preparation of salts of ascorbyl-2-phosphoric acid esters
Procédé de préparation de sels d'esters d'acides ascorbyl-2-phosphoriques

(30) Priorität: 13.07.1998 DE 19831056
(43) Veröffentlichungstag der Anmeldung: 19.01.2000
(73) Patentinhaber: BASF AKTIENGESELLSCHAFT, 67056 Ludwigshafen (DE)
(72) Erfinder: Böttcher, Andreas, Dr., 69226 Nussloch (DE); Gurski, Hans, 67459 Böhl-Iggelheim (DE)

(56) Entgegenhaltungen:
- EP-A- 0 582 924
- WO-A-91/13895
- DATABASE WPI Section Ch, Week 9025 Derwent Publications Ltd., London, GB; Class B03, AN 197993 XP002151627 & JP 02 131494 A (KYOWA HAKKO KKK), 21. Mai 1989 (1989-05-21)

## Beschreibung

Die vorliegende Erfindung betrifft ein Verfahren zur Herstellung von Salzen von Ascorbyl-2-phosphorsäureestern, insbesondere von Salzen von Ascorbyl-2-monophosphorsäureestern.

L-Ascorbinsäure (Vitamin C) gehört mit zu den am wenigsten stabilen Vitaminen sowohl in Nahrungsmitteln als auch beispielsweise in kosmetischen und pharmazeutischen Zubereitungen.

L-Ascorbyl-2-phosphorsäureester stellen dagegen eine oxidationsstabile und bioverfügbare Form von Vitamin C dar. Insbesondere Calcium-L-ascorbat-2-monophosphat sowie Calcium-L-ascorbat-2-triphosphat werden als stabile Vitamin C Derivate in der Tierernährung, speziell im Bereich Aquakultur eingesetzt.

In der Kosmetik wird Vitamin C-Phosphat als Antioxidants zum Schutz der Haut gegen Radikale, als Bleichmittel sowie als Wirkstoff zur Verbesserung der Elastizität der Haut verwendet.

Während in der Aquakultur das schwerlösliche Calcium-Salz bevorzugt eingesetzt wird, sind aufgrund des Anforderungsprofils in kosmetischen Formulierungen bevorzugt wasserlösliche Salze von Ascorbyl-2-phosphorsäureestern gefragt. Hierzu gehören u.a. das Natrium- oder das Magnesium-L-ascorbat-2-monophosphat.

Die technische Synthese von Calcium-L-ascorbat-2-monophosphat bzw. Calcium-L-ascorbat-2-triphosphat ist u.a. beschrieben in EP-A-0 229 154, US 5,149,829, EP-A-0 471 805 und EP-A-0 582 924. Insbesondere das Verfahren gemäß EP-A-0 582 924 stellt einen technisch einfachen Zugang zu Calcium-L-ascorbat-2-monophosphat mit hoher Produktreinheit dar.

Dagegen gestaltet sich die Synthese der wasserlöslichen Natrium- bzw. Magnesiumsalze der Ascorbyl-2-phosphorsäureester wesentlich komplizierter. Insbesondere für solche Produkte, die die hohen Reinheitsanforderungen für deren Anwendung in kosmetischen oder pharmazeutische Zubereitungen erfüllen müssen, sind derzeit keine technisch gut durchführbaren Verfahren bekannt.

JP-A-09-077784 sowie JP-A-02-131494 beschreiben Verfahren zur Herstellung von amorphem bzw. kristallinem Natrium-L-ascorbat-2-monophosphat durch Neutralisation einer wäßrigen Lösung von Ascorbyl-2-monophosphorsäureestern mit Natronlauge auf pH 7 bis 11 bzw. 8 bis 10 und Fällung des gebildeten Natrium-L-ascorbat-2-monophosphats bei erhöhten Temperaturen durch Zugabe niedermolekularer Alkohole oder Ketone mit einer Kohlenstoffkette von C₁ bis C₅.

Ein Problem dieser Verfahren ist die Bereitstellung eines entsprechend reinen und technisch gut zugänglichen Ascorbyl-2-monophosphorsäureesters in der protonierten Form als Ausgangsmaterial für die oben erwähnte Überführung in das Natrium- bzw. Magnesiumsalz. Die dafür in beiden japanischen Schriften beschriebene, fraktionierte Ionenaustauschchromatographie an einem schwach basischen Ionenaustauscher ist für eine technische Durchführung zu aufwendig.

Es war daher die Aufgabe der Erfindung ein Verfahren zur Herstellung von Salzen von Ascorbyl-2-phosphorsäureestern, ausgewählt aus der Gruppe, bestehend aus Natrium-, Kalium-, Magnesiumund Aluminiumsalzen bereitzustellen, das in technischem Maßstab vorteilhaft durchgeführt werden kann und mit dem eine Produktqualität erzielt wird, die u.a. die strengen Reinheitsanforderungen für Wirkstoffe u.a. in der Kosmetik erfüllt.

Diese Aufgabe wurde erfindungsgemäß gelöst durch ein Verfahren zur Herstellung von Salzen von Ascorbyl-2-phosphorsäureestern der allgemeinen Formel I, 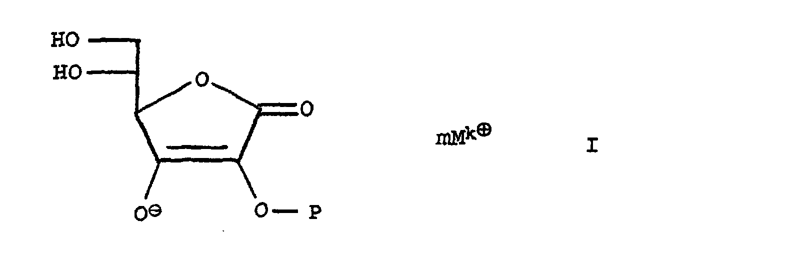 in der die Variablen folgende Bedeutung haben:
- M: Natrium, Kalium, Magnesium, Aluminium;
- P: 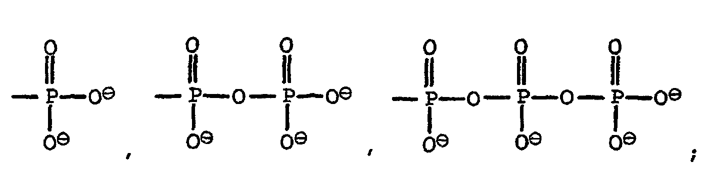
- k⊕: Wertigkeit und
- m: Äquivalente, wobei das Produkt aus k·m 3 bis 5 sein kann,
dadurch gekennzeichnet, daß man
a) Calcium-L-ascorbat-2-phosphat der Formel Ia, in der P die oben genannte Bedeutung hat, in einer wäßrigen Lösung von Ascorbyl-2-phosphorsäureestern der Formel II, in der P¹ für H₂PO₃, H₃P₂O₆ oder H₄P₃O₉ steht, bei einem pH-Wert von 0,5 bis 4 löst, 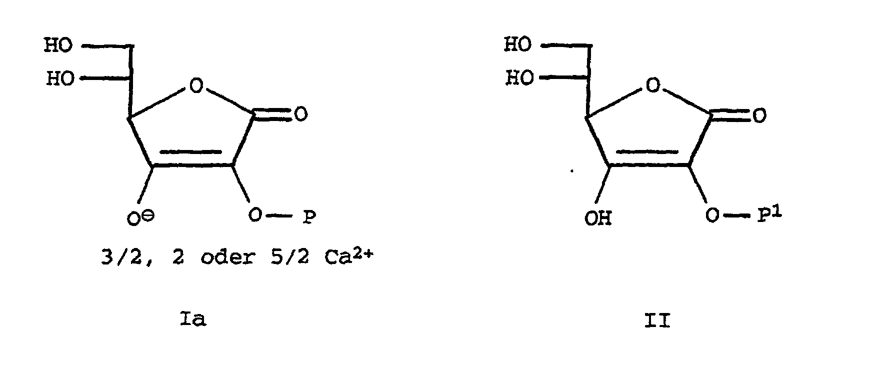
b) aus der erhaltenen Lösung die Calciumionen entfernt,
c) die verbleibende Lösung mit Natrium-, Kalium-, Magnesiumoder Aluminiumsalzen auf einen pH-Wert von 7 bis 11 einstellt und
d) die gebildeten Salze der Ascorbyl-2-phosphorsäureester der allgemeinen Formel I isoliert.

Unter Ascorbat-2-phosphat sowie unter Ascorbyl-2-phosphorsäureester sind allgemein Phosphorsäureester der Ascorbinsäure zu verstehen, bei denen die Hydroxylgruppe am C2-Kohlenstoff des Fünfrings mit Mono-, Di- oder Triphosphorsäureresten verestert ist.

Das erfindungsgemäße Verfahren eignet sich dabei bevorzugt zur Herstellung der o.g. Salze von L-Ascorbat-2-mono-bzw. L-Ascorbat-2-triphosphat, besonders bevorzugt zur Herstellung von Natrium-, Kalium-, Magnesium- oder Aluminium-L-ascorbat-2-monophosphat.

Ausgangsmaterial für die Herstellung der o.g. Salze von Ascorbyl-2-phosphat nach dem erfindungsgemäßen Verfahren sind Calcium-L-ascorbat-2-phosphate, bevorzugt das schwer wasserlösliche Calcium-L-ascorbat-2-monophosphat sowie das entsprechende Calcium-L-ascorbat-2-triphosphat, deren Herstellung u.a. in EP-A-0 229 154, EP-A-0 471 805 und EP-A-0 582 924 beschrieben ist.

Die Herstellung des besonders bevorzugt eingesetzten Ausgangsmaterials Calcium-L-ascorbat-2-monophosphat erfolgt vorteilhafterweise gemäß EP-A-0 582 924 durch
a₁) Umsetzen von Ascorbinsäure mit Phosphoroxychlorid in Gegenwart von Pyridin unter Aufrechterhalten eines pH-Wertes von 12 bis 13 mittels einer wäßrigen Kalilauge,
b₁) Ausfällung der bei dieser Umsetzung gebildeten Phosphorsäureionen mittels Magnesiumchlorid in Mengen von etwa 0,9 bis 1,1 Mol pro Mol Phosphorsäureionen als Kalium-Magnesiumphosphat,
c₁) Abtrennung von Kalium-Magnesiumphosphat,
d₁) Abdestillieren des Pyridins aus der verbleibenden wäßrigen Lösung,
e₁) Umsetzung der erhaltenen wäßrigen Lösung mit Calciumchlorid und
f₁) Isolierung des hierbei auskristallisierenden Calcium-Lascorbat-2-monophosphats.

Bezüglich näherer Ausführungsformen dieser Synthese sei auf die o.g. Patentschrift hingewiesen.

Calcium-L-ascorbat-2-monophosphat zeichnet sich u.a. aus durch seine einfache technische Zugänglichkeit und seine für die Verwendung in der Tierernährung erforderliche hohe Reinheit.

Zur Überführung der schwer wasserlöslichen Calciumsalze in die erfindungsgemäßen, eingangs genannten, wasserlöslichen Salzformen ist es aus verfahrenstechnischer Sicht vorteilhaft, Calcium-Lascorbat-2-phosphat, insbesondere Calcium-L-ascorbat-2-monophosphat in einem wäßrigen Medium in Lösung zu bringen.

Gemäß EP-A-0 471 805, kann dies beispielsweise durch Lösen in wäßriger Salzsäure erfolgen. Nachteil dieser Verfahrensweise ist jedoch, daß die in diesem Lösungsgemisch vorliegenden Chloridionen die Reinheit der anschließend isolierten, wasserlöslichen Salze der Ascorbyl-2-phosphorsäureester beeinträchtigen.

Überraschenderweise konnte nun gezeigt werden, daß sich Calcium-L-ascorbat-2-phosphat in einer wäßrigen Lösung von Ascorbyl-2-phosphorsäureestern der oben genannten Formel II, im folgenden "Ausgangslösung" genannt, bei einem pH-Wert von 0,5 bis 4, bevorzugt 1 bis 3,5, besonders bevorzugt 2 bis 3 löst. Insbesondere Calcium-L-ascorbat-2-monophosphat löst sich unter diesen Bedingungen unter Bildung von Calcium-Hydrogen-L-ascorbat-2-monophosphat. Eine solche "Ausgangslösung" läßt sich beispielsweise durch Entsalzung einer Alkali- oder Erdalkalimetallsalzlösung von Ascorbat-2-phosphat, bevorzugt des Calciumsalzes der Formel Ia, besonders bevorzugt durch Entsalzung von Calcium-L-ascorbat-2-monophosphat mittels eines stark sauren Ionenaustauschers herstellen. Zur Erzielung der erforderlichen Produktreinheit der herzustellenden wasserlöslichen Salze der Ascorbyl-2-phosphorsäureester der Formel I wird die im Schritt a) eingesetzte "Ausgangslösung" vorteilhafterweise aus den reinen Verbindungen der o.g. Phosphate gewonnen.

Die "Ausgangslösung" zeigt einen pH-Wert von 0,1 bis 4, bevorzugt 0,5 bis 2. Der Gehalt an Ascorbyl-2-phosphorsäureestern in der "Ausgangslösung" liegt im Bereich von 5 bis 35, bevorzugt 10 bis 30, besonders bevorzugt 15 bis 25 Gew.-%.

Ein Vorteil des erfindungsgemäßen Löseprozesses [Schritt a) des eingangs genannten Herstellverfahrens] ist es, daß keine zusätzlichen Fremdionen als Verunreinigungen in die Lösung eingebracht werden.

In einer bevorzugten Ausführungsform wird Calcium-L-ascorbat-2-monophosphat als 5 bis 30 gew.-%ige, bevorzugt 10 bis 25 gew.-%ige, besonders bevorzugt als 15 bis 22 gew.-%ige wäßrige Suspension vorgelegt und mit der "Ausgangslösung", enthaltend Ascorbyl-2-monophosphorsäureester in den o.g. Konzentrationen, bis zum Erreichen des o.g. pH-Werts und zur Bildung von wasserlöslichem Calcium-Hydrogen-L-ascorbat-2-monophosphat versetzt.

Es ist aber auch möglich, den Löseschritt in umgekehrter Reihenfolge durchzuführen, indem eine 5 bis 30 gew.-%ige, bevorzugt 10 bis 25 gew.-%ige, besonders bevorzugt 15 bis 22 gew.-%ige wäßrige Suspension von Calcium-L-ascorbat-2-monophosphat zur "Ausgangslösung" gegeben wird.

Aus der erfindungsgemäß hergestellten Lösung, enthaltend 5 bis 30 Gew.-%, bevorzugt 10 bis 25 Gew.-%, besonders bevorzugt 15 bis 22 Gew.-% Calcium-Hydrogen-L-ascorbat-2-monophosphat, die gegebenenfalls zur Abtrennung von ungelösten Restpartikeln klärfiltriert werden kann, lassen sich die in Lösung vorliegenden Calciumionen in an sich bekannter Weise entfernen. Geeignete Methoden zur Abtrennung der Metallkationen sind u.a. die Elektrodialyse oder bevorzugt die Entsalzung an einem stark sauren Ionenaustauscherharz.

Bezüglich des eingesetzten stark sauren Ionenaustauschers sind ohne Einschränkung alle im Handel verfügbaren Ionenaustauscherharze dieses Typs verwendbar. Beispiele für stark saure Ionenaustauscher sind u.a. Lewatit® S100, Amberlite® IR 120, Dowex® HCR und Duolite® C20.

Ein weiterer Vorteil des erfindungsgemäßen Verfahrens liegt in einer Teilrückführung der nach Verfahrensschritt b) erhaltenen wäßrigen Lösung von Ascorbyl-2-phosphorsäureestern (in der protonierten Form), insbesondere einer Teilrückführung des nach der Behandlung mit dem stark sauren Ionenaustauscher erhaltenen Eluats. Ein solcher Teilstrom kann beispielsweise zum erneuten Auflösen von Calcium-L-ascorbat-2-monophosphat verwendet werden. Die Menge an rückgeführter Lösung von Ascorbyl-2-monophosphorsäureestern ist dabei abhängig von der jeweils wieder eingesetzten Menge an Calcium-L-ascorbat-2-monophosphat. In der Regel liegt diese Menge an Ascorbyl-2-monophosphorsäureester im Bereich von 20 bis 80 Gew.-%, bevorzugt 30 bis 70 Gew.-%, besonders bevorzugt 40 bis 60 Gew.-%, bezogen auf die Gesamtmenge der nach Verfahrensschritt b) erhaltenen wäßrigen Lösung von Ascorbyl-2-monophosphorsäureester.

Außerdem kann die bei der Regenerierung des stark sauren Ionenaustauscherharzes mit wäßriger Salzsäurelösung anfallende wäßrige Calciumchloridlösung wieder zur Herstellung von Calcium-Lascorbat-2-monophosphat verwendet werden, was zusätzlich einen verfahrensökologischen und verfahrensökonomischen Vorteil des Gesamtverfahrens darstellt.

Der Rest der nach Verfahrensschritt b) erhaltenen wäßrigen Lösung von Ascorbyl-2-phosphorsäureester - in der bevorzugten Ausführungsform der Rest des Ionenaustauschereluates, enthaltend Ascorbyl-2-monophosphorsäureester - wird zur Herstellung der wasserlöslichen Salze von Ascorbat-2-phosphat mit Natrium-, Kalium-, Magnesium- oder Aluminiumsalzen auf einen pH-Wert von 7 bis 12, bevorzugt 8 bis 11, besonders bevorzugt 9,5 bis 10,5 eingestellt. Als basische Salze kommen u.a. die entsprechenden Hydroxide, Oxide oder Carbonate, bevorzugt Hydroxide wie NaOH, KOH, Mg(OH)₂ oder Al(OH)₃, besonders bevorzugt in Form ihrer konzentrierten wäßrigen Lösungen in Frage.

Die weitere Behandlung der wäßrigen Lösungen von Natrium-, Kalium-, Magnesium- oder Aluminium-L-ascorbat-2-phosphat, insbesondere von Natrium- oder Magnesium-L-ascorbat-2-monophosphat und deren Isolierung, erfolgt in an sich bekannter Weise, beispielsweise gemäß den japanischen Patentanmeldungen JP-A-09-077784 sowie JP-A-02-131494.

In einer besonderen Ausführungsform läßt sich durch Zugabe eines mit Wasser mischbaren organischen Lösungsmittels, beispielsweise eines Alkohols einer Kettenlänge von C₁ bis C₅, eines C₃-C₅-Ketons oder eines cyclischen Ethers zu der o.g. wäßrigen Lösung die Polarität des Lösungsmittelsystems so verändern, daß es zu einer Ausfällung des Wertproduktes kommt.

Die zur Fällung verwendeten Alkohole sind z.B. Methanol, Ethanol, n-Propanol, iso-Propanol, n-Butanol, tert.-Butanol, bevorzugt Methanol oder Ethanol. Als Ketone eignen sich Aceton, Methylethylketon, Diethylketon, bevorzugt Aceton. Als cyclischer Ether wird bevorzugt Tetrahydrofuran eingesetzt.

Die zur Fällung eingesetzten Mengen der o.g. Alkohole, Ketone oder cyclischen Ether werden so gewählt, daß der Anteil dieser organischen Lösungsmittel 30 bis 90 %, bevorzugt 40 bis 80 %, besonders bevorzugt 50 bis 75 % (v/v), bezogen auf die Gesamtmenge des Gemisches, beträgt.

Je nach Temperatur, bei der die Fällung der o.g. Salze von Ascorbat-2-phosphat, insbesondere Ascorbat-2-monophosphat durchgeführt wird, erhält man kristallines oder amorphes Wertprodukt. Einzelheiten bezüglich der jeweiligen Fällbedingungen sind dabei den bereits genannten japanischen Patentanmeldungen zu entnehmen.

Die anschließende Isolierung und Trocknung der nach dem erfindungsgemäßen Verfahren hergestellten Salze erfolgt nach an sich bekannten Filtrations- und Trocknungsverfahren.

Durch die Verwendung von reinem Calcium-L-ascorbat-2-phosphat, insbesondere von Calcium-L-ascorbat-2-monophosphat, bietet das erfindungsgemäße Verfahren vorteilhafterweise die Möglichkeit, die nach Verfahrensschritt c) erhaltene Lösung von Natrium-, Kalium-, Magnesium- oder Aluminium-L-ascorbat-2-phosphat, aufgrund ihres geringen Anteils an Verunreinigungen, direkt in einen Trocknungsprozeß, beispielsweise einer Gefrier- oder Sprühtrocknung, bevorzugt einer Sprühtrocknung zu überführen. Auf diese Weise erhält man ein Trockenpulver von wasserlöslichem Vitamin C-phosphat mit hoher Reinheit.

Die nach dem erfindungsgemäßen Verfahren hergestellten Salze von Ascorbat-2-phosphat, insbesondere Natrium oder Magnesium-L-ascorbat-2-monophosphat zeigen eine Reinheit von 90 bis 99,9 %, bevorzugt > 95 %.

Die technisch einfache Durchführbarkeit der Verfahrensschritte a) bis d) des erfindungsgemäßen Herstellprozesses ermöglicht ebenso das Betreiben einer kontinuierlichen oder semikontinuierlichen Anlage. So kann Calcium-L-ascorbat-2-phosphat beispielsweise durch kontinuierliches Zudosieren mittels einer Dosierschnecke zur "Ausgangslösung" gelöst werden. Die anschließende kontinuierliche Entsalzung dieser Lösung, vorzugsweise über einen stark sauren Ionenaustauscher, einschließlich der Regenerierung des Ionenaustauscherharzes erfolgt in an sich bekannter Weise, beispielsweise beschrieben in Ullmanns Encyklopädie der technischen Chemie, Verlag Chemie (4. Auflage, Bd. 13, 1977, S. 279-346). Die Neutralisation (Schritt c) sowie die Isolierung des Wertproduktes (Schritt d) sind ebenfalls an sich bekannte Standardoperationen, die sich in einfacher Weise kontinuierlich durchführen lassen.

Anhand der folgenden Beispiele wird das erfindungsgemäße Verfahren näher erläutert.

### Beispiel 1

200 g Calcium-L-ascorbat-2-monophosphat wurden in 500 ml Wasser suspendiert und mit 850 g einer 17 gew.-%igen Lösung von Ascorbyl-2-monophosphorsäureester (protonierte Form) versetzt. Der pH-Wert der Lösung betrug 2,9. Die Lösung wurde klärfiltriert und das Filtrat zur Abtrennung der Calciumionen über eine, mit einem stark sauren Ionenaustauscher (Lewatit® S100) gefüllte Säule gegeben. Nach Waschen mit Wasser wurde das Eluat vereinigt und mit 50%iger Natronlauge auf pH 9,5 eingestellt. Unter Rückflußerhitzen wurden insgesamt 2 l Methanol zur wäßrigen Lösung zugetropft. Anschließend wurde das Gemisch auf Raumtemperatur abgekühlt und die entstandenen Kristalle von Natrium-L-ascorbat-2-monophosphat abgesaugt, mit Methanol gewaschen und getrocknet. Man erhielt 180 g Natrium-L-ascorbat-2-monophosphat mit einer Reinheit von > 95 %.

### Beispiel 2

200 g Calcium-L-ascorbat-2-monophosphat wurden wie in Beispiel 1 in 500 ml Wasser suspendiert und mit 850 g einer 17 gew.-%igen Lösung von Ascorbyl-2-monophosphorsäureester (protonierte Form) versetzt. Der pH-Wert der Lösung betrug 2,9. Die Lösung wurde klärfiltriert und das Filtrat zur Abtrennung der Calciumionen über eine, mit einem stark sauren Ionenaustauscher (Lewatit® S100) gefüllte Säule gegeben. Nach Waschen mit Wasser wurde das Gesamteluat in zwei gleich große Teile aufgeteilt. Eine Hälfte wurde analog Beispiel 1 mit 50%iger Natronlauge auf pH 9,5 eingestellt. Unter Rückflußerhitzen wurden insgesamt 1 l Methanol zu dieser wäßrigen Lösung zugetropft. Anschließend wurde das Gemisch auf Raumtemperatur abgekühlt und die die entstandenen Kristalle von Natrium-L-ascorbat-2-monophosphat abgesaugt, mit Methanol gewaschen und getrocknet. Man erhielt 88 g Natrium-L-ascorbat-2-monophosphat mit einer Reinheit von > 95%. Die zweite Hälfte des Ionenaustauscheraustrags wurde für den nächsten Synthesezyklus zum erneuten Lösen einer Suspension von 200 g Calcium-L-ascorbat-2-monophosphat in 500 ml Wasser verwendet und wie bereits beschrieben weiterbearbeitet.

## Patentansprüche

1. Verfahren zur Herstellung von Salzen der Ascorbyl-2-phosphorsäureester der allgemeinen Formel I, 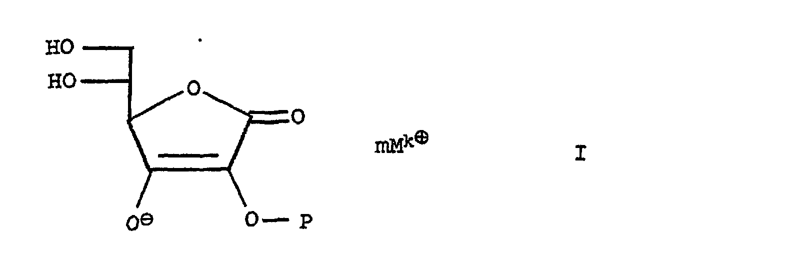 in der die Variablen folgende Bedeutung haben:
M Natrium, Kalium, Magnesium, Aluminium;
P 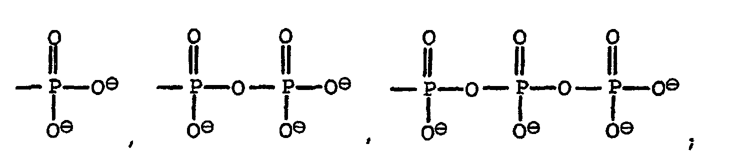
k⊕ Wertigkeit und
m Äquivalente, wobei das Produkt aus k·m 3 bis 5 sein kann,
**dadurch gekennzeichnet, daß** man
a) Calcium-L-ascorbat-2-phosphat der Formel Ia, in der P die oben genannte Bedeutung hat, in einer wäßrigen Lösung von Ascorbyl-2-phosphorsäureestern der Formel II, in der P¹ für H₂PO₃, H₃P₂O₆ oder H₄P₃O₉ steht, bei einem pH-Wert von 0,5 bis 4 löst, 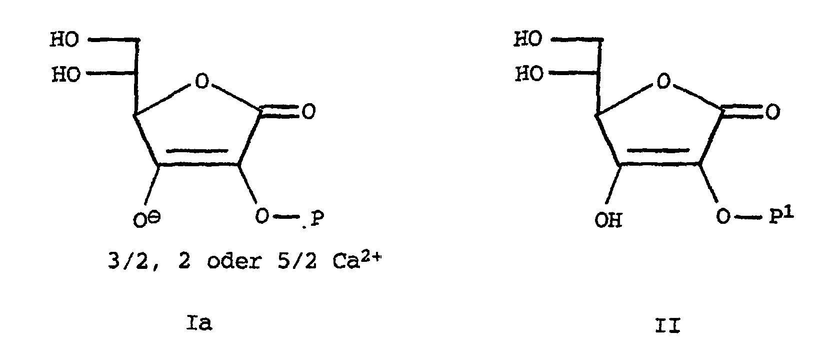
b) aus der erhaltenen Lösung die Calciumionen entfernt,
c) die verbleibende Lösung mit Natrium-, Kalium-, Magnesiumoder Aluminiumsalzen auf einen pH-Wert von 7 bis 11 einstellt und
d) die gebildeten Salze der Ascorbyl-2-phosphorsäureester der allgemeinen Formel I isoliert.

2. Verfahren nach Anspruch 1, **dadurch gekennzeichnet, daß** im Schritt b) die Calciumionen durch Adsorption an ein stark saures Ionenaustauscherharz entfernt werden.

3. Verfahren nach Anspruch 1, **dadurch gekennzeichnet, daß** man im Schritt d) zu der nach Verfahrensschritt c) erhaltenen Lösung ein mit Wasser mischbares, organisches Lösungsmittel gibt und das hierbei ausfallende Natrium-, Kalium-, Magnesium- oder Aluminiumsalz der Ascorbyl-2-phosphorsäureester der Formel I isoliert.

4. Verfahren nach den Anspruch 3, **dadurch gekennzeichnet, daß** im Schritt d) ein Lösungsmittel ausgewählt aus der Gruppe, bestehend aus Methanol, Ethanol, Aceton, Methylethylketon, Diethylketon und Tetrahydrofuran verwendet wird.

5. Verfahren nach Anspruch 1, **dadurch gekennzeichnet, daß** ein Teil der nach Verfahrensschritt b) erhaltenen, von Calciumionen befreiten Lösung wieder zum Auflösen der Calcium-Lascorbat-2-phosphat der Formel Ia verwendet wird.

6. Verfahren nach Anspruch 1, **dadurch gekennzeichnet, daß** man die nach Schritt c) erhaltene Lösung direkt sprühtrocknet.

7. Verfahren nach den Ansprüchen 1 bis 6, **dadurch gekennzeichnet, daß** es sich um ein kontinuierliches Verfahren handelt.

8. Verfahren nach den Ansprüchen 1 bis 7, **dadurch gekennzeichnet, daß** es zur Herstellung von Natrium- oder Magnesium-Lascorbat-2-monophosphat der Formel Ib verwendet wird.

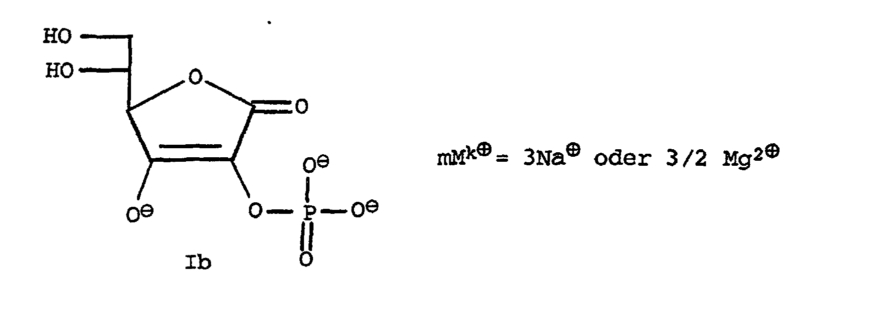

9. Verfahren nach Anspruch 8, **dadurch gekennzeichnet, daß** es sich bei den Natrium- oder Magnesium-L-ascorbat-2-monophosphaten um kristalline oder amorphe Feststoffe handelt.

10. Verfahren nach Anspruch 8, **dadurch gekennzeichnet, daß** als Ausgangsmaterial Calcium-L-ascorbat-2-monophosphat eingesetzt wird, das hergestellt wird durch
a₁) Umsetzen von Ascorbinsäure mit Phosphoroxychlorid in Gegenwart von Pyridin unter Aufrechterhalten eines pH-Wertes von 12 bis 13 mittels einer wäßrigen Kalilauge,
b₁) Ausfällung der bei dieser Umsetzung gebildeten Phosphorsäureionen mittels Magnesiumchlorid in Mengen von etwa 0,9 bis 1,1 Mol pro Mol Phosphorsäureionen als Kalium-Magnesiumphosphat,
c₁) Abtrennung von Kalium-Magnesiumphosphat,
d₁) Abdestillieren des Pyridins aus der verbleibenden wäßrigen Lösung,
e₁) Umsetzung der erhaltenen wäßrigen Lösung mit Calciumchlorid und
f₁) Isolierung des hierbei auskristallisierenden Calcium-Lascorbat-2-monophosphates.

11. Verfahren nach Anspruch 2, wobei in einem zusätzlichen Schritt der stark saure Ionenaustauscher regeneriert wird, **dadurch gekennzeichnet, daß** die beim Regenerieren des Ionenaustauscherharzes mit Salzsäure freigewordene wäßrige CaCl₂-Lösung wieder für das Verfahren zur Herstellung von Calcium-L-ascorbat-2-monophosphat, definiert gemäß Anspruch 10, verwendet werden kann.

## Claims

1. A process for preparing salts of ascorbyl 2-phosphoric esters of the formula I, 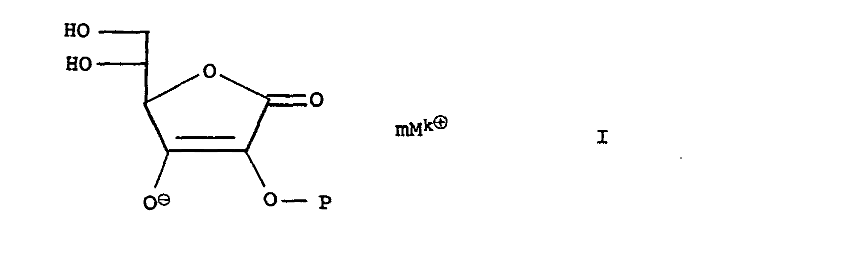 where the variables have the following meanings:
M is sodium, potassium, magnesium, aluminum;
P is 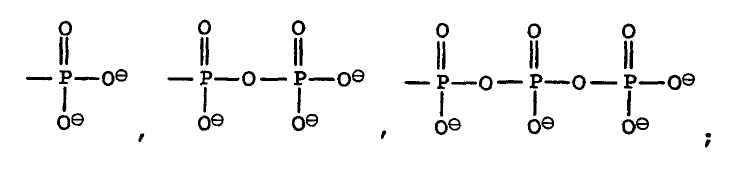
k⊕ is the valence and
m are equivalents, where the product of k·m can be from 3 to 5,
which comprises
a) dissolving calcium L-ascorbate-2-phosphate of the formula Ia, where P is as defined above, in an aqueous solution of ascorbyl 2-phosphoric esters of the formula II, where P¹ is H₂PO₃, H₃P₂O₆ or H₄P₃O₉, at a pH of from 0.5 to 4, 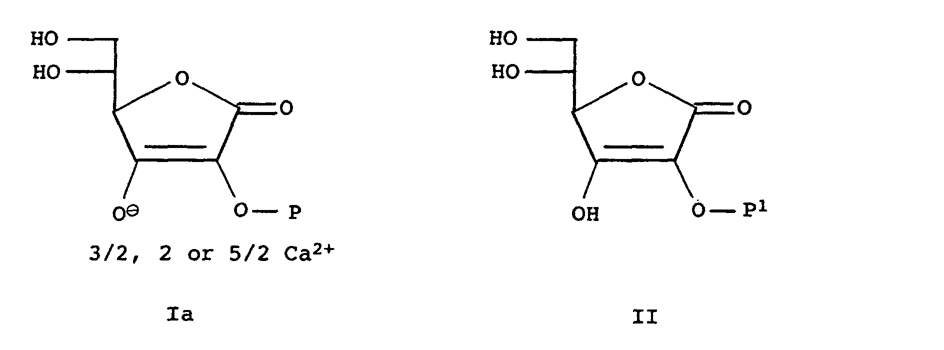
b) removing the calcium ions from the resulting solution,
c) adjusting the solution which remains to a pH of from 7 to 11 by means of sodium, potassium, magnesium or aluminum salts and
d) isolating the resulting salts of the ascorbyl 2-phosphoric ester of the formula I.

2. A process as claimed in claim 1, wherein, in step b), the calcium ions are removed by adsorption on a strong acid ion-exchange resin.

3. A process as claimed in claim 1, wherein, in step d), a water-miscible, organic solvent is added to the solution obtained after process step c) and the precipitated sodium, potassium, magnesium or aluminum salt of the ascorbyl 2-phosphoric ester of the formula I is isolated.

4. A process as claimed in claim 3, wherein the solvent used in step d) is selected from the group consisting of methanol, ethanol, acetone, methyl ethyl ketone, diethyl ketone and tetrahydrofuran.

5. A process as claimed in claim 1, wherein part of the calcium-free solution obtained after process step b) is again used for dissolving the calcium L-ascorbate-2-phosphate of the formula Ia.

6. A process as claimed in claim 1, wherein the solution obtained after step c) is directly spray dried.

7. A process as claimed in any of claims 1 to 6 which is carried out continuously.

8. A process as claimed in any of claims 1 to 7 used for preparing sodium or magnesium L-ascorbate-2-monophosphate of the formula Ib.

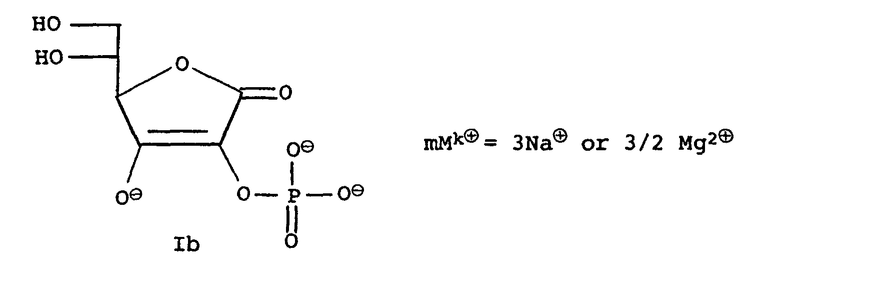

9. A process as claimed in claim 8, wherein the sodium or magnesium L-ascorbate-2-monophosphates are crystalline or amorphous solids.

10. A process as claimed in claim 8, wherein the starting material used is calcium L-ascorbate-2-monophosphate prepared by
a₁) reacting ascorbic acid with phosphorus oxychloride in the presence of pyridine while maintaining a pH of from 12 to 13 by means of an aqueous potassium hydroxide solution,
b₁) precipitating the phosphate ions formed in this reaction as potassium magnesium phosphate by means of magnesium chloride in amounts of from about 0.9 to 1.1 mol per mol of phosphate ions,
c₁) separating off potassium magnesium phosphate,
d₁) distilling off the pyridine from the aqueous solution which remains,
e₁) reacting the aqueous solution obtained with calcium chloride and
f₁) isolating the calcium L-ascorbate-2-monophosphate which crystallizes out.

11. A process as claimed in claim 2 in which the strong acid ion exchanger is regenerated in an addition step, wherein the aqueous CaCl₂ solution produced in the regeneration of the ion-exchange resin with hydrochloric acid can be used again in the process for preparing calcium L-ascorbate-2-monophosphate as defined in claim 10.

## Revendications

1. Procédé pour la préparation de sels des esters ascorbyl-2-phosphoriques de formule générale I 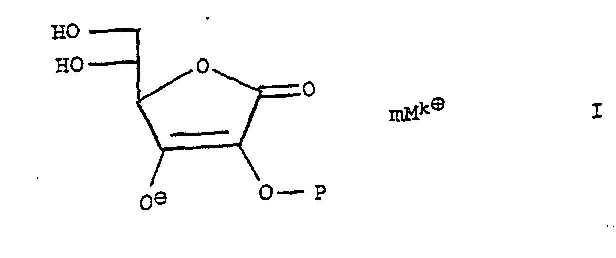 dans laquelle les symboles ont les significations suivantes
M représente le sodium, le potassium, le magnésium, l'aluminium ;
P représente 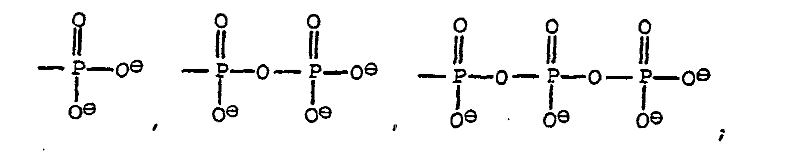 k⊕ est la valence et
m le nombre des équivalents, le produit k x m pouvant aller de 3 à 5, **caractérisé par le fait que**
a) on dissout le L-ascorbate-2-phosphate de calcium de formule Ia dans laquelle P a les significations indiquées ci-dessus, dans une solution aqueuse d'ester ascorbyl-2-phosphorique de formule II dans laquelle P¹ représente H₂PO₃, H₃P₂O₆ ou H₄P₃O₉, à un pH de 0,5 à 4, 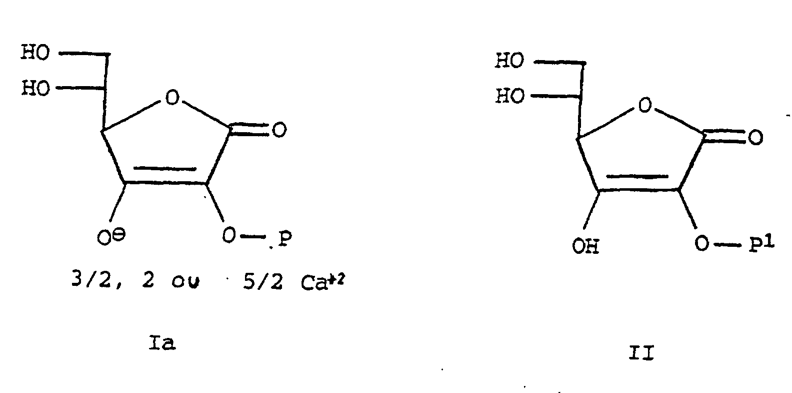
b) on élimine les ions calcium de la solution obtenue,
c) on règle la solution résiduelle à un pH de 7 à 11 à l'aide de sels de sodium, de potassium, de magnésium ou d'aluminium et
d) on isole les sels des esters ascorbyl-2-phosphoriques de formule générale I formés dans ces opérations.

2. Procédé selon la revendication 1, **caractérisé par le fait que**, au stade b), on élimine les ions calcium par adsorption sur une résine échangeuse d'ions fortement acide.

3. Procédé selon la revendication 1, **caractérisé par le fait que**, au stade d), on ajoute à la solution obtenue au stade c) un solvant organique miscible à l'eau et on isole le sel de sodium, de potassium, de magnésium ou d'aluminium des esters ascorbyl-2 phosphoriques de formule I qui précipite alors.

4. Procédé selon la revendication 3, **caractérisé par le fait que**, au stade d), on utilise un solvant choisi dans le groupe consistant en le méthanol, l'éthanol, l'acétone, la méthyléthylcétone, la diéthylcétone et le tétrahydrofuranne.

5. Procédé selon la revendication 1, **caractérisé par le fait que** l'on utilise une partie de la solution obtenue au stade b), débarrassée des ions calcium, pour dissoudre le L-ascorbate-2-phosphate de calcium de formule Ia.

6. Procédé selon la revendication 1, **caractérisé par le fait que** l'on sèche directement par atomisation la solution obtenue au stade c).

7. Procédé selon les revendications 1 à 6, **caractérisé par le fait qu'**il est mis en oeuvre en continu.

8. Procédé selon les revendications 1 à 7, **caractérisé par le fait qu'**on l'exploite pour la préparation du L-ascorbate-2-monophosphate de sodium ou de magnésium de formule Ib.

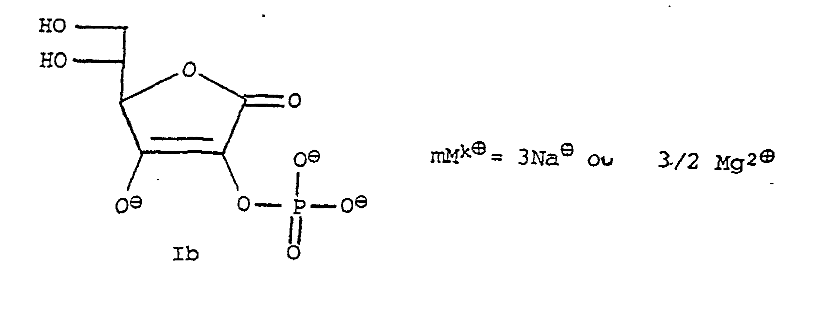

9. Procédé selon la revendication 8, **caractérisé par le fait que** les L-ascorbate-2-monophosphates de sodium ou de magnésium sont des substances solides cristallisées ou amorphes.

10. Procédé selon la revendication 8, **caractérisé par le fait que** l'on utilise en tant que produit de départ le L-ascorbate-2-monophosphate de calcium qui a été préparé par
a₁) réaction de l'acide ascorbique avec l'oxychlorure de phosphore en présence de pyridine avec maintien d'un pH de 12 à 13 à l'aide d'une lessive de potasse,
b₁) précipitation des ions acide phosphorique formés dans cette réaction par du chlorure de magnésium en quantité d'environ 0,9 à 1,1 mol par mol des ions acide phosphorique, sous la forme de phosphate double de potassium et de magnésium,
c₁) séparation du phosphate double de potassium et de magnésium,
d₁) distillation de la pyridine à partir de la solution aqueuse résiduelle,
e₁) réaction de la solution aqueuse obtenue avec le chlorure de calcium et
f₁) isolement du L-ascorbate-2-monophosphate de calcium qui cristallise de cette solution.

11. Procédé selon la revendication 2, avec un stade opératoire supplémentaire consistant à régénérer l'échangeur d'ions fortement acide, **caractérisé par le fait que** l'on peut réutiliser la solution aqueuse de CaCl₂ libérée à la régénération de la résine échangeuse d'ions par l'acide chlorhydrique dans le procédé pour la préparation du L-ascorbate-2-monophosphate de calcium selon la revendication 10.
